# EUROPÄISCHE PATENTSCHRIFT

(11) **EP 1 717 479 B1**
(45) Veröffentlichungstag und Bekanntmachung des Hinweises auf die Patenterteilung: **26.09.2007**
(21) Anmeldenummer: 06004804.8
(22) Anmeldetag: 09.03.2006
(51) Int. Cl.: F16F 9/512

(54) **Schwingungsdämpfer mit amplitudenselektiver Dämpfkraft**
Shock absorber with a damping force depending on the amplitude
Amortisseur de vibrations avec une force d'amortissement dépendant de l'amplitude

(30) Priorität: 30.04.2005 DE 102005020293
(43) Veröffentlichungstag der Anmeldung: 02.11.2006
(60) Teilanmeldung: 07006763.2
(73) Patentinhaber: ZF FRIEDRICHSHAFEN AG, 88046 Friedrichshafen (DE)
(72) Erfinder: Hammer, Thomas, 97653 Bischofsheim (DE); Doppernas, Michael, 96170 Priesendorf (DE); Planitzer, Matthias, 97520 Röthlein (DE); Denner, Manfred, 97711 Massbach (DE)

(56) Entgegenhaltungen:
- EP-A- 1 437 525
- EP-A- 1 496 285
- DE-A1- 4 427 273
- DE-A1- 19 948 328
- DE-B- 1 264 165
- DE-C1- 10 041 199
- US-A1- 2005 056 506

## Beschreibung

Die Erfindung betrifft einen Schwingungsdämpfer mit amplitudenselektiver Dämpfkraft gemäß dem Oberbegriff von Patentanspruch 1.

Aus der DE 197 49 356 B4 ist ein Schwingungsdämpfer mit amplitudenselektiver Dämpfkraft bekannt, der eine Kolbenanordnung aufweist, die ein unteres und ein oberes Ventil umfasst, die von einem Abstandsstück auf Abstand gehalten werden. Beide Ventile sind jeweils beidseitig mit Dämpfventilscheiben und mindestens einer Rückschlagventilscheibe bestückt. Zwischen den beiden Ventilen ist ein Schaltring axial verschiebbar angeordnet, der in Abhängigkeit der Bewegungsrichtung der Kolbenstange auf den einander zugewandten Ventilscheiben der beiden Ventile zur Anlage kommt und dabei einen Ringspalt zwischen den Ventilscheiben und der Innenwandung des Zylinders freigibt oder blockiert.

Die DE 199 48 328 A1 beschreibt ebenfalls einen Schwingungsdämpfer mit amplitudenselektiver Dämpfkraft, dessen Kolbenanordnung einen axial beweglichen Schaltring aufweist, der eine Strömungsverbindung durch einen hohlen Kolbenstangenzapfen steuert. Eine Auslassöffnung der Strömungsverbindung ist einer Anschlagfläche für den Schaltring vorgelagert. Dadurch können Geräuschprobleme eingeschränkt werden. Es muss jedoch hingenommen werden, dass die amplitudenselektive Dämpfkraftänderung nur in Ausfahrrichtung der Kolbenstange möglich ist und ein gewisser Totweg, nämlich der Abstand der Auslassöffnung bis zur Anschlagfläche überwunden werden muss, bis eine amplitudenselektive Dämpfkraftänderung in Ausfahrrichtung wirksam wird.

Aufgabe der vorliegenden Erfindung ist es eine alternative Lösung zur Geräuschminimierung bei einem Schwingungsdämpfer mit amplitudenselektiver Dämpfkraft aufzuzeigen.

Erfindungsgemäß wird die Aufgabe dadurch erreicht, dass die Anschlagbewegung des Schaltrings an den Anschlagflächen von einem Dämpfmediumpolster abgebremst wird.

Bei einer Kolbenstangenbewegung findet nicht nur eine Schaltringverschiebung aufgrund der Relativbewegung zur Kolbenanordnung statt, sondern auch der Dämpfmediumdruck innerhalb der Strömungsverbindung wirkt auf den Schaltring in Richtung einer Anschlagfläche. Das Dämpfmediumpolster auf der dem erhöhten Dämpfmediumdruck gegenüberliegenden Seite am Schaltring sorgt für einen Druckausgleich und damit für eine verringerter Anschlagkraft des Schaltrings auf der Anschlagfläche.

Dazu wird der Schaltring hinterströmt und im Endbereich der Strömungsverbindung liegt eine profilierte Umlenkfläche für das Dämpfmedium in Richtung des Schaltrings vor. Die Umlenkfläche bewirkt eine Druckbeaufschlagung des Schaltrings entgegen der Druckbeaufschlagungen auf der Gegenseite.

Gemäß einem vorteilhaften Unteranspruch wird die Umlenkfläche von einer Rinne gebildet. Die Rinne ist vertieft zur Anschlagfläche ausgeführt und bewirkt eine gezielte Anströmung des Schaltrings.

In weiterer vorteilhafter Ausgestaltung weist der Schaltring ein Drosselprofil auf, das vor Erreichen der Anschlagfläche in die profilierte Umlenkfläche eintaucht. Es bildet sich zwischen dem Drosselprofil und der Umlenkfläche ein Drosselspalt, der den Gegendruck auf den Schaltring vergrößert.

Anhand der folgenden Figurenbeschreibung soll die Erfindung näher erläutert werden.

Es zeigt:

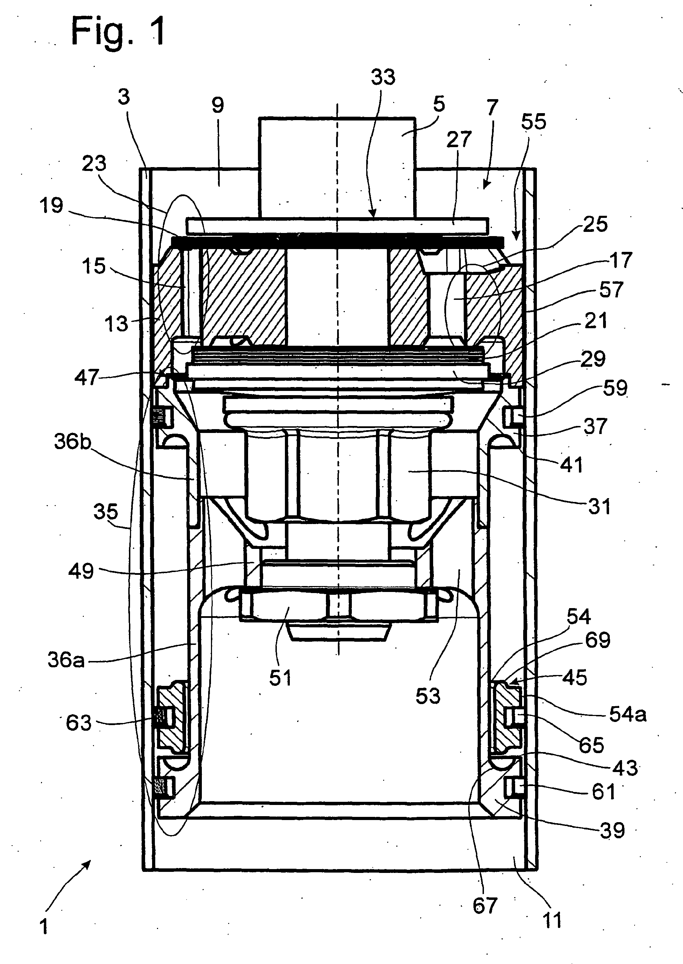

- Fig. 1: Kolbenanordnung mit einem Umlenkprofil

Die Figur 1 zeigt einen Ausschnitt aus einem Schwingungsdämpfer 1 beliebiger Bauart. In einem Zylinder 3 ist eine Kolbenstange 5 zusammen mit einer Kolbenanordnung 7 axial beweglich geführt. Die Kolbenanordnung unterteilt den dämpfmittelgefüllten Zylinder 3 in einen kolbenstangenseitigen Arbeitsraum 9 und einen kolbenstangenfernen Arbeitsraum 11. Ein Hauptbestandteil der Kolbenanordnung ist ein Kolbenkörper 13, der Verbindungskanäle 15; 17 mit Ventilscheiben 19, 21 für beide Durchströmungsrichtungen aufweist. Die Verbindungskanäle 15 und die Ventilscheiben 19 bilden ein Druckstufenventil 23, das eine Dämpfkraft in Einfahrrichtung der Kolbenstange erzeugt. Ein Zugstufenventil 25, das in Ausfahrrichtung der Kolbenstange wirkt, besteht aus den Verbindungskanälen 17 und den Ventilscheiben 21. Die Ventilscheiben sind auf den Kolbenkörper vorgespannt und geben jeweils die Austrittsöffnungen der Verbindungskanäle frei, wenn in den Verbindungskanälen ein bestimmter auf die Ventilscheiben wirksamer Öffnungsdruck aufgebaut ist. Den Ventilscheiben 19; 21 schließen sich noch Stützscheiben 27; 29 an. Das Paket zwischen den Stützscheiben wird von einer Kolbenmutter 31 auf einen Absatz 33 der Kolbenstange 5 vorgespannt.

Die Kolbenanordnung 7 umfasst eine Baugruppe 35, die vom Kolbenkörper und den Ventilscheiben unabhängig ausgeführt ist. Die Baugruppe 35 verfügt über einen hülsenförmigen Grundkörper 36a; 36b, der Ringstege 37; 39 aufweist, an denen einander zugewandt Anschlagflächen 41; 43 für einen axial beweglichen Schaltring 45 ausgeführt sind. Axial stützt sich die Baugruppe 35 im kolbenstangenfernen Arbeitsraum 11 am Kolbenkörper 13 ab, der auch eine Zentrierung 47 für die Baugruppe aufweist. Die gesamte Baugruppe 35 wird über eine Haltescheibe 49 an der Kolbenstange 5 fixiert. Eine von der Kolbenmutter 31, die die Verspannungskette der Kolbenanordnung zwischen den beiden Stützscheiben 27; 29 fixiert, unabhängige Zentriermutter 51 spannt die Baugruppe über die Haltescheibe 49 auf den Kolbenkörper 13 vor, wobei die Haltescheibe mit mindestens einer Dämpfmitteldurchlassöffnung 53 versehen ist, um einen ungehinderten Zu- und Abstrom für die Dämpfventile 23; 25 gewährleisten zu können.

Der Schaltring 45 weist radial zur Innenwandung des Zylinders 3 und nach radial innen bezogen auf den hülsenförmigen Grundkörper jeweils einen Ringspalt 54; 54a auf. Der Ringspalt 54 steuert eine Strömungsverbindung 55 zwischen den beiden Arbeitsräumen 9; 11. Der Strömungsverbindung 55 setzt sich in den Bereich der Mantelfläche des Kolbenkörpers fort. Dazu verfügt der Kolbenkörper über mindestens eine Axialnut 57, z. B. in der Form einer Abflachung. In den Ringstegen sind Voröffnungsquerschnitte 59; 61 in Form von Drosselringen ausgeführt. Die Voröffnungsquerschnitte können unterschiedlich groß ausgeführt sein. Wenn sich der Schaltring 45 zwischen den Anschlagflächen 41; 43 der Ringstege 37; 39 befindet, sind die Voröffnungsquerschnitte 59; 61 wirksam.

Im Schaltring 45 verfügt die Baugruppe als Teil der Kolbenanordnung über einen Drosselring 63 der einen Voröffnungsquerschnitt 65 bestimmt. Der Drosselring 63 ist nach radial außen vorgespannt und bestimmt durch den Reibkontakt mit der Innenwandung des Zylinders 3 die axiale Position des Schaltrings 45. Der Schaltring steuert den zusätzlichen Voröffnungsquerschnitt 59; 61 zum Voröffnungsquerschnitt 65 des Drosselrings. Der Voröffnungsquerschnitt 65, der vom Drosselring 63 im Schaltring 45 bestimmt wird, ist kleiner als der Voröffnungsquerschnitt 59; 61 in den Ringstegen 39; 41, der bei Anlage des Schaltrings wirksam wird. Der Ringspalt 54 zwischen der hülsenförmigen Baugruppe 36a; 36b weist einen vielfachen Querschnitt auf, wie die Voröffnungsquerschnitte 59; 61, so dass der Voröffnungsquerschnitt 65 im Schaltring 45 bei abgehobener Schaltstellung von einer der beiden Anschlagflächen 41; 43 funktionslos ist.

Bei einer Kolbenstangenbewegung, z. B. in Ausfahrrichtung, dabei wird der Arbeitsraum 9 komprimiert, fließt Dämpfmedium über die Axialnut 57 in Richtung des Drosselrings im Ringsteg 37. Der Voröffnungssteg drosselt zwar das in die Strömungsverbindung 55 zwischen den beiden Arbeitsräumen 9; 11 einströmende Dämpfmedium, doch wirkt eine Druckkraft auf die Oberseite des Schaltrings. Das Dämpfmedium kann zwischen dem relativ groß bemessenem Ringspalt 54 in Richtung des unteren Ringstegs 39 mit der Anschlagfläche 43 strömen. Dabei trifft das Dämpfmedium im Endbereich des Schaltringwegs auf eine profilierte Umlenkfläche 67, die ein Dämpfmediumpolster in Richtung des Schaltrings 45 aufbaut und diesen damit abbremst. Die Umlenkfläche wird von einer Rinne gebildet und ist radial innen zur Anschlagfläche 43 ausgeführt.

Der Schaltring 45 verfügt beidseitig über ein Drosselprofil 69, das vor Erreichen der Anschlagflächen 41; 43 in die profilierte Umlenkfläche 67 bzw. Rinne eintaucht und einen Drosselkanal bildet, der das Abfließen des Druckpolsters durch den Voröffnungsquerschnitt 61 drosselt.

## Patentansprüche

1. Schwingungsdämpfer mit amplitudenselektiver Dämpfkraft, umfassend eine Kolbenstange, die in einem dämpfmittelgefüllten Zylinder axial beweglich geführt ist, wobei die Kolbenstange eine Kolbenanordnung trägt, die den Zylinder in einen kolbenstangenseitigen und einen kolbenstangenfernen Arbeitsraum unterteilt, wobei zwischen den Arbeitsräumen eine Strömungsverbindung vorliegt, die von einem axial beweglichen Schaltring in Abhängigkeit von der Kolbenstangenbewegung gesteuert wird, wobei der Schaltweg des Schaltrings von zwei Anschlagflächen begrenzt wird,
**dadurch gekennzeichnet,**
**dass** die Anschlagbewegung des Schaltrings (45) an den Anschlagflächen (41 ; 43) von einem Dämpfmediumpolster abgebremst wird.

2. Schwingungsdämpfer nach Anspruch 1,
**dadurch gekennzeichnet,**
**dass** der Schaltring (45) hinterströmt wird und im Endbereich der Strömungsverbindung (55) eine profilierte Umlenkfläche (67) für das Dämpfmedium in Richtung des Schaltrings (45) vorliegt.

3. Schwingungsdämpfer nach Anspruch 2,
**dadurch gekennzeichnet,**
**dass** die Umlenkfläche (67) von einer Rinne gebildet wird.

4. Schwingungsdämpfer nach Anspruch 2,
**dadurch gekennzeichnet,**
**dass** der Schaltring (45) ein Drosselprofil (69) aufweist, das vor Erreichen der Anschlagfläche (41; 43) in die profilierte Umlenkfläche (67) eintaucht.

## Claims

1. Vibration damper with amplitude-selective damping force, comprising a piston rod, which is guided so that it is axially moveable in a damping medium-filled cylinder, the piston rod carrying a piston arrangement, which divides the cylinder into a piston rod-side working chamber and a working chamber remote from the piston rod, a flow connection which is controlled by an axially moveable switching ring as a function of the piston rod movement being provided between the working chambers, the switching travel of the switching ring being limited by two stop faces, **characterized in that** the impact movement of the switching ring (45) against the stop faces (41; 43) is buffered by a damping medium cushion.

2. Vibration damper according to Claim 1, **characterized in that** the switching ring (45) is of rear-flow type and a profiled baffle face (67) for deflecting damping medium in the direction of the switching ring (45) is provided in the end area of the flow connection (55).

3. Vibration damper according to Claim 2, **characterized in that** the baffle face (67) is formed by a groove.

4. Vibration damper according to Claim 2, **characterized in that** the switching ring (45) has a restriction profile (69), which sinks into the profiled baffle face (67) before reaching the stop face (41; 43).

## Revendications

1. Amortisseur de vibrations avec une force d'amortissement dépendant de l'amplitude, comprenant une tige de piston qui est guidée en déplacement axial dans un cylindre rempli d'agent d'amortissement, la tige de piston portant un ensemble de piston qui divise le cylindre en une chambre de travail côté tige de piston et une chambre de travail éloignée de la tige de piston, sachant qu'une liaison fluidique est présente entre les chambres de travail, qui est commandée en fonction du mouvement de la tige de piston par une bague de commutation axialement mobile, la course de commutation de la bague de commutation étant limitée par deux surfaces de butée,
**caractérisé en ce que** le mouvement de butée de la bague de commutation (45) contre les surfaces de butée (41 ; 43) est freiné par un coussin de fluide d'amortissement.

2. Amortisseur de vibrations selon la revendication 1, **caractérisé en ce que** le flux s'écoule derrière la bague de commutation (45), et une surface profilée de déviation (67) pour le fluide d'amortissement en direction de la bague de commutation (45) est présente dans la région terminale de la liaison fluidique (55).

3. Amortisseur de vibrations selon la revendication 2, **caractérisé en ce que** la surface de déviation (67) est formée par une rigole.

4. Amortisseur de vibrations selon la revendication 2, **caractérisé en ce que** la bague de commutation (45) présente un profil d'étranglement (69) qui s'enfonce dans la surface de déviation profilée (67) avant d'atteindre la surface de butée (41 ; 43).
